# EUROPEAN PATENT APPLICATION

(11) **EP 3 059 084 A1**
(43) Date of publication of application: **24.08.2016**
(21) Application number: 16155892.9
(22) Date of filing: 16.02.2016
(51) Int. Cl.: B41F 13/10, B29C 67/00, B41F 27/10, B41N 6/00

(54) **BUSH FOR FILLING THE SPACE IN A SLEEVE FOR USE IN FLEXO-PRINTING, SLEEVE AND METHOD FOR MANUFACTURING**

(30) Priority: 17.02.2015 NL 2014302; 10.07.2015 NL 2015135
(71) Applicant: Color Control B.V., 2408 AW Alphen aan den Rijn (NL)
(72) Inventor: OTTEN, Martinus Petrus, 2408 AW Alphen aan den Rijn (NL)
(74) Representative: Patentwerk B.V.

(57) **Abstract**

The invention relates to a bush (5) for filling the space between a base jacket (4) and an outer jacket (6) of a cylinder for use in flexo-printing, the cylinder being a sleeve (1) or anilox roller (40), wherein the bush is manufactured by means of 3-D printing. A bush manufactured by means of 3-D printing can be manufactured in lighter form and with a greater bending stiffness than prior art foam bushes. The invention also provides a sleeve for use in flexo-printing, comprising a base jacket, a bush of the above stated type and an outer jacket, wherein the bush is connected to the base jacket and the outer jacket is arranged by means of lamination on the external tube (9) of the bush. The invention further provides a method for manufacturing a bush for filling the space between a base jacket and an outer jacket of a sleeve for use in flexo-printing, wherein the bush is manufactured by means of 3-D printing.

## Description

The invention relates to a bush for filling the space between a base jacket and an outer jacket of a cylinder for use in flexo-printing, the cylinder being a sleeve or an anilox roller. Flexo-printing is a method of printing wherein a flexible printing plate, usually a letterpress plate is arranged on a so-called sleeve and the sleeve is placed on a shaft in a printing press. The diameter of the sleeve must be sufficiently large to provide space for the printing plate, so the diameter of such sleeves is often considerable, and considerably larger than the shaft of the printing press into which the sleeve has to be placed. Such a sleeve therefore comprises a rigid base jacket with which the sleeve rests on the shaft and a rigid outer jacket on which the flexible printing plate rests. The space between the two rigid jackets, i.e. the bush, is formed according to the prior art from foam, such as PUR foam.

Despite the fact that foam is a relatively light material, the foam bushes, and thereby the sleeves provided with a foam bush, are heavy. This is a significant drawback as the sleeves usually have to be transported by hand to the printing presses between the mounting machines where the printing plates are attached. The foam moreover has a certain flexibility so that the bush, and thereby the sleeve as a whole, is insufficiently rigid, which can result in problems during printing.

The object of the invention is to provide a bush which is lighter and stiffer.

This object is achieved with a bush of the above stated type manufactured by means of 3-D printing.

3-D printing provides the possibility of making numerous spatial structures so that the invention provides the option of making a structure geared to the specific requirements, such as a light weight and a high stiffness.

3-D printing is typically also referred to in the field as fused filament fabrication, wherein filaments of plastic materials are applied. Usual plastics here are; acrylonitrile butadiene styrene (ABS), polycarbonate (PC), polylactic acid (PLA), high-density polyethylene (HDPE), PC/ABS, polyphenylsulfone (PPSU) and high-impact polystyrene (HIPS).

The 3-D printed material formed here is a stiff and solid material, and so not a foam structure. These properties are thus present in the bush according to the invention because of the 3-D printing process.

The invention likewise provides a sleeve for use in flexo-printing, comprising a base jacket, a bush of the above stated type and an outer jacket, wherein the bush is connected to the base jacket and the outer jacket is arranged by means of lamination on the external tube of the bush.

Finally, the invention provides a method for manufacturing a sleeve wherein a bush manufactured according to the above stated method is pushed around a base jacket, is glued to the base jacket and an outer jacket is arranged by means of lamination on the outer surface of the bush.

In addition to a bush suitable for use in combination with a sleeve, the invention relates in similar manner to a bush suitable for filling the space between a base jacket and an outer jacket of an anilox roller.

The same requirements of roundness and rigidity are set for the anilox rollers as for the sleeves. Ink is applied to the printing plate with an anilox roller. The outer surface of the outer layer of these rollers is provided with numerous small cells. Ink is applied in any random manner to the anilox roller, whereby the ink enters the cells. Excess ink is removed by a doctor blade so that ink remains only in the cells and the ink is distributed in highly regular manner over the surface of the roller. In contact with the printing roller the ink thus distributed in highly regular manner over the surface is applied to the printing roller, this greatly improving the quality of the printed material. Such anilox rollers are usually provided with a steel core, whereby the weight of such rollers is considerable.

According to a first preferred embodiment, the bush comprises an external tube formed by 3-D printing and a spatial structure formed by 3-D printing extending on the inner side of the external tube. The spatial structure can be shaped in advantageous manner here by the 3-D printing process so that it meets the set requirements, such as a low weight and a high bending stiffness. Since in order to form a sleeve an outer jacket formed by a hard layer must be arranged around the bush, which jacket is preferably formed by lamination, the outer layer of the bush is preferably formed by an external tube which can serve as a good basis for the outer jacket.

This is also an important factor in the case of an anilox roller, wherein a usually ceramic outer jacket has to be arranged around the bush.

According to another preferred embodiment, the bush comprises an internal tube formed by 3-D printing and formed on the inner side of the spatial structure. This internal tube serves to provide a good adhesion between the bush and the base jacket of the sleeve, since the adhesion is formed in this preferred embodiment by glueing.

This embodiment likewise provides a sleeve of the above stated type, wherein the internal tube of the bush is connected by means of glue to the base jacket.

Instead of using a glue connection between the bush and the internal tube of the sleeve it is likewise possible to make use of a sleeve of the above stated type wherein the bush is a bush of the above stated type and the spatial structure of the bush is printed onto the base jacket of the sleeve.

According to yet another embodiment, the spatial structure formed by 3-D printing comprises cavities enclosed by the spatial structure. It hereby becomes possible to make a light and strong structure.

The spatial structure preferably comprises walls with a component extending in radial direction. The completed sleeve must after all absorb the forces during printing. These forces comprise a significant component in radial direction which can be properly absorbed by the walls extending in this direction.

In order to enable even better absorption of these radial forces, at least some of the number of walls with a component extending in the radial direction preferably extend between the internal tube and the external tube.

Particularly, though not exclusively when the sleeves have a considerable length, it is recommended that the spatial structure comprises walls with a component extending in axial direction. Such walls make for a greater bending stiffness of the sleeve so that sagging of the sleeve is prevented.

A normal sleeve is configured to carry a flexible printing plate, wherein the sleeve is mounted directly onto the shaft of the printing press. Since positioning of the flexible printing plates with the required accuracy on the sleeve is difficult, hollow sleeves are applied to which the printing plates are permanently attached so that in the case of a new order for the same printed material, the plate need not be mounted again. Such hollow sleeves are preferably mounted by means of a so-called adapter sleeve. Such an adapter sleeve is similar to a 'normal' sleeve, but an adapter sleeve is provided with a number of openings arranged in its outer surface, a conduit system connecting to each of these openings and connected to a feed opening arranged in an end surface. Via the feed openings air can be blown between the adapter sleeve and the hollow sleeve so as to facilitate sliding of the sleeves over each other. A specific embodiment therefore provides a bush of the above stated type wherein the spatial structure comprises a channel system extending between an opening in an end surface of the bush and at least one opening in the outer surface of the bush. The bush is thus provided with the channel system during manufacture of an adapter sleeve.

This embodiment likewise provides a sleeve of the above stated type which is formed by an adapter sleeve, the bush is one of the above stated type and the external tube is provided with openings each connecting to an opening of the bush.

The above considerations and measures likewise apply to anilox rollers. It is noted here that it is generally not necessary to apply air channels in the case of anilox rollers since they usually always remain joined to their bush. It is therefore possible to make use of a glue connection between the bush and the cylinder with the anilox structure.

The invention also provides a method for manufacturing a bush for filling the space between a base jacket and an outer jacket of a sleeve for use in flexo-printing, wherein the bush is manufactured by means of 3-D printing.

In 3-D printing the material is generally applied layer by layer. It is therefore possible to print in different directions. According to an embodiment, the bush is constructed in axial direction during the 3-D printing. This has the advantage that a symmetrical construction can be easily generated.

Construction in the axial direction does however require a 3-D printer with an operational height which is at least as great as the axial length of the bush. In the case of bushes of great length this is not possible or requires excessively high printers. In order to avoid this drawback a preferred embodiment proposes manufacturing the bush in different segments and subsequently joining these segments together to form a bush.

3-D printing makes it possible in principle to manufacture random structures. It is thus possible to print above open spaces, which does however require temporarily filling of the space, for instance by printing a second, easily removable material. The removal of this material requires a separate operation, and is only possible when the filled space is still accessible after completion of the workpiece. In order to obviate these drawbacks a further preferred embodiment proposes that, apart from the initial layer, material is arranged only on already printed structures during the printing.

It is likewise possible to print in radial direction instead of in axial direction. The length of the bush here has no limitation in the height of the 3-D printing device, but does so in the length, although this problem can likewise be solved by making the bush in parts and later joining them together.

Performing a 3-D printing process in the radial direction makes it possible to print directly onto a carrier. A specific preferred embodiment provides the measures that the initial structure is printed directly onto the base jacket. Subsequent glueing is hereby no longer necessary.

It is of course possible to construct the substantially cylindrical bush from a point on the periphery, although this requires much printing on empty space, and thus the use of removable material. It is therefore more attractive that a radially extending segment with a part of the initial structure is printed initially, the segment is rotated round the base jacket of the bush, a segment is printed connecting to the printed segment and these two steps are repeated until the bush is completed. This avoids printing on empty space, although the workpiece does however have to be rotated from time to time. This method is performed particularly, though not exclusively, when printing takes place on the base jacket. It is after all then easy to rotate the base jacket.

When an adapter sleeve has to be manufactured, it is recommended that a channel system is formed during the 3-D printing which extends between one opening in the end surface and at least one opening in the outer surface.

This preferred embodiment also provides a method for manufacturing an adapter sleeve wherein a bush manufactured according to the above method is pushed around a base jacket, is glued to the base jacket, an outer jacket is arranged on the bush and, after the outer jacket has been arranged, at least one opening is drilled in the outer surface of the outer jacket, each of which openings connect to an opening in the outer surface of the bush.

The present invention is elucidated hereinbelow with reference to the accompanying drawings, in which:
Figure 1 is a schematic isometric view of a sleeve mounted on a shaft and provided with a printing plate;
Figure 2 is a cross-sectional view of the sleeve shown in figure 1;
Figure 3 is a schematic isometric view of a bush manufactured by a 3-D printer by means of a first method;
Figure 4 is a cross-sectional view of a bush manufactured by a 3-D printer according to a second method;
Figures 5A and 5B show cross-sectional views during different steps of the manufacture of a bush by a 3-D printer according to a third method;
Figure 6 is a cross-sectional view of a bush for an adapter sleeve; and
Figure 7 is a schematic perspective view of an anilox roller according to the invention.

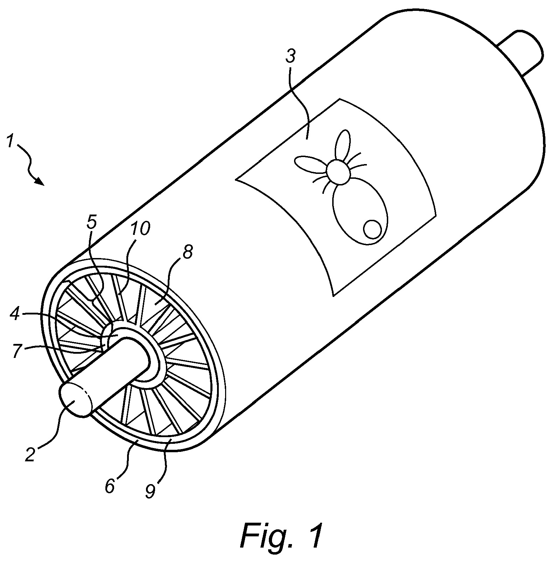

The sleeve shown in figure 1, which is designated in its entirety with 1, is placed on a shaft 2 and serves to carry a flexible printing plate 3. Sleeve 1 comprises a base jacket 4, a bush 5 and an outer jacket 6. Base jacket 4 and outer jacket 6 are manufactured according to the prior art as well as in the invention from laminated plastic.

Bush 5 is manufactured according to the invention by means of 3-D printing and according to a first embodiment bush 5 comprises an internal tube 7, a spatial structure 8 and an external tube 9. Bush 5 is manufactured in its entirety by 3-D printing. Internal tube 7 of bush 5 is connected by means of glueing to base jacket 4 and outer jacket 6 is laminated onto external tube 9. In the present embodiment spatial structure 8 takes the form of partitions 10 extending in radial and axial direction. It will be apparent that, instead of this open structure of radially and axially extending partitions, other structures can be applied such as a honeycomb structure or the structure of the spokes of a spoke wheel. This relates to all structures extending in axial direction; it is equally possible to make use of structures which include structures extending in only radial and tangential direction, or of combinations.

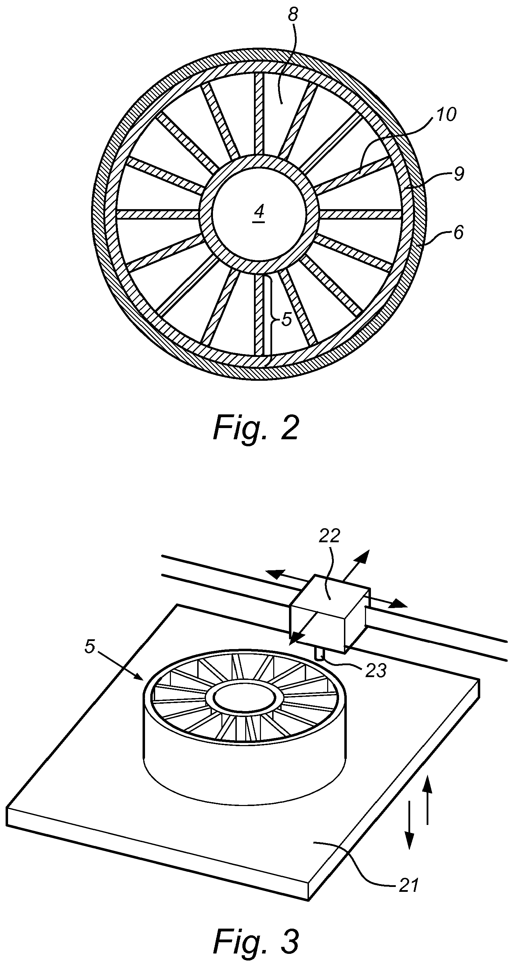

Shown in figure 2 is a cross-sectional view of a sleeve 1 according to a second embodiment. This second embodiment is distinguished from the first embodiment by the absence of the internal tube 7. This second embodiment is manufactured by printing bush 5 directly onto base jacket 4. The internal tube can hereby be dispensed with since a glue connection is no longer necessary. It is however quite possible in the case of a bush printed directly onto base jacket 4 to initially also print an internal tube 7 as part of bush 5.

Figure 3 shows schematically how a bush according to the invention is manufactured by means of printing in the axial direction of the bush. Use is made for printing purposes of a per se known 3-D printer, of which only a part of the components is shown in the figure. The 3-D printer comprises, among other parts, a platform 21 which serves as base for the workpiece for printing and which is movable in vertical direction. The 3-D printer further comprises a carrier 22 which is movable in both horizontal directions. Placed on carrier 22 is a printer head 23 which doses the plastic for printing, as known from the prior art.

During printing of bush 5 a first layer is initially printed onto platform 21 by printer head 23 during movement of carrier 22, possibly with the insertion of a layer of material which facilitates separation of the workpiece and platform 21. As likewise known per se, the subsequent layers are then applied layer by layer in the same manner, wherein the platform is lowered each time. This method is repeated until the bush or a part of the bush is completed. The sleeves do after all usually have a considerable length which exceeds the operating height of many 3-D printers. It may therefore be necessary to manufacture bush 5 in sections.

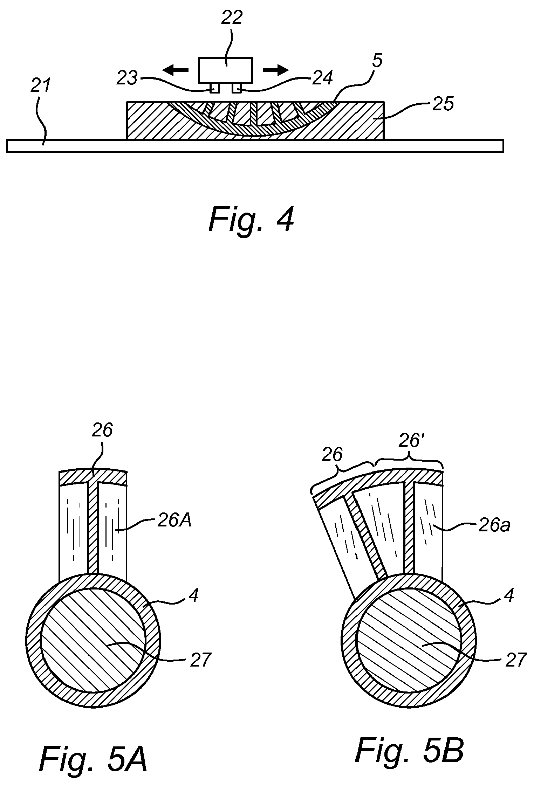

It is however also possible to manufacture bush 5 in radial direction by means of 3-D printing. According to the embodiment shown in figure 4, a start is made not in the centre but at an edge of the bush 5 to be printed. Only a narrow edge of the bush rests here on the platform so that use must be made of a support in the form of material 25 to be printed which is removable later, for instance by being dissolved. Use is made here of a carrier 22 which is provided with a first printer head 23 for printing the bush 5 itself, and with a second printer head 24 for printing the subsequently removable material 25. It is noted that in this manner of printing the bush 5 is printed over its full width in one operation. It is also possible here to print bush 5 in sections in order to avoid an excessive length of the 3-D printer.

Printing in radial direction is also possible by printing from the shaft. It is then possible to print the bush in two halves and to later join the two halves together. It is however also possible to print onto the base jacket of the sleeve to be formed. Such a situation is shown in figure 5A. A base jacket 4 is placed here around a rotatable shaft 27. Here the rotatable shaft 27 as it were replaces the platform on which a workpiece is normally printed. As shown in figure 5A, a segment 26 of the bush 5 to be formed is printed by means of 3-D printing, including the parts 26A to be removed later which serve to support the 'freely suspended parts' of the bush. Once this segment 26 has been completed, the whole of base jacket 4 and printed segment 26 is turned by rotating the rotatable shaft 27 and the subsequent segment 26' is printed as shown in figure 5B. This step is then repeated until bush 5 is completed. It is noted that in the shown embodiment the bush 5 is not provided with an internal tube 7, so that a glue connection need not be made between bush 5 and the base jacket since printing takes place directly onto the base jacket. It is however quite possible to form an internal tube 7 during printing in order to enhance the adhesion between bush 5 and base jacket 4. The parts 26A for removal have to be removed after completion of bush 5.

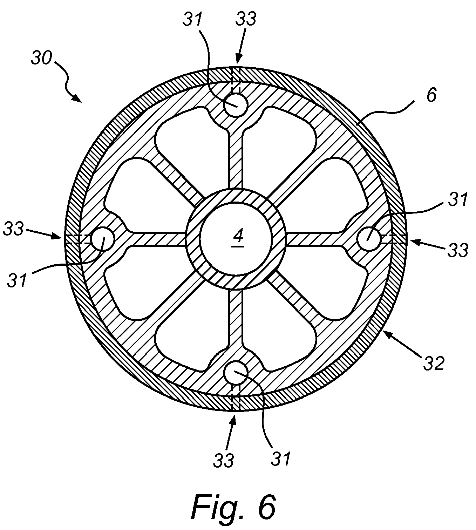

Figure 6 shows a cross-section of an adapter sleeve 30 which is configured to carry hollow sleeves. These hollow sleeves are placed clampingly round adapter sleeve 30. In order to facilitate placing and removal of the hollow sleeves use is usually made of a thin layer of air between the two sleeves. In order to form this layer of air use is made of a network of air channels 31 in adapter sleeve 30, the network including several openings on the outer surface of adapter sleeve 30. It is attractive to incorporate the network of air channels 31 in the 3-D printed bush. Air channels 31 as shown in figure 6 then lead on the one hand to openings 33 arranged in outer surface 32 of adapter sleeve 30 and on the other to one or more connections, not shown in the drawings, arranged in an end surface of adapter sleeve 30. A compressor can be connected to these connections to carry air to openings 33. It is otherwise also possible for channels 33 to be connected to each other so that it is possible to suffice with a single connection on an end surface.

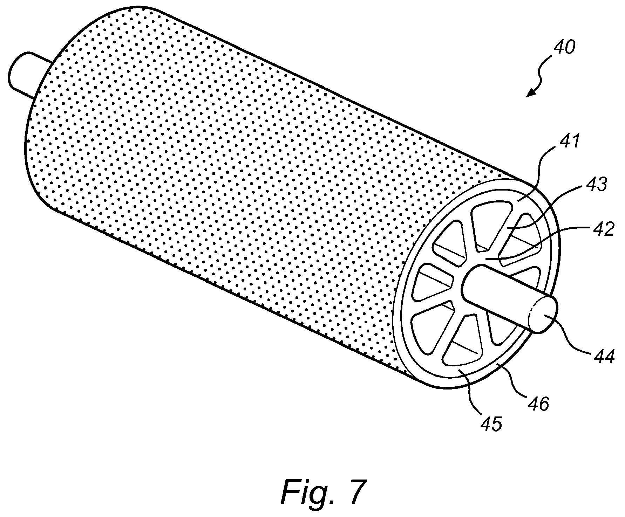

Finally, figure 7 shows an anilox roller, designated in its entirety with 40, which is used for inking printing rollers. Anilox roller 40 is arranged round a shaft 44 by means of a cylindrical base jacket 42 which surrounds shaft 44. For the co-rotation with shaft 44 use can be made of a wedge, not shown in the drawing, although it is likewise possible to make use of a protrusion, likewise not shown in the drawing, which engages between a pair of radial parts. Arranged concentrically to base jacket 42 is an outer jacket 45 which is connected by means of eight radial parts 43 to base jacket 42. It is otherwise possible to make use of a different number of radial parts or of a different structure between the base jacket and the outer jacket. Reference is made in this respect to the foregoing description of the sleeve for flexo-printing.

The actual anilox surface, in the form of a ceramic tube 46, is arranged on outer jacket 45. This ceramic tube 46 is provided on its outer surface with a large number of small cavities which serve as ink reservoir. They are arranged on the surface by means of laser. It is however likewise possible to make use of a metal tube. In general the tube is pushed onto the bush and fixed to the bush. The cavities can have already been arranged here in the surface of the tube, although it is also possible to arrange the cavities only after the tube and the bush have been joined together.

The measures described in the various embodiments above can be combined with each other and do not constitute a limitation of the scope of protection, this being defined by the claims.

## Claims

1. Bush for filling the space between a base jacket and an outer jacket of a cylinder for use in flexo-printing, the cylinder being a sleeve or an anilox roller, **characterized in that** the bush is manufactured by means of 3-D printing.

2. Bush as claimed in claim 1, **characterized in that** the bush comprises an external tube, which is formed by 3-D printing and configured to be connected to the outer jacket of the sleeve or the anilox roller, and comprises a spatial structure formed by 3-D printing extending on the inner side of the external tube.

3. Bush as claimed in claim 2, **characterized in that** the bush comprises an internal tube formed by 3-D printing which is formed on the inner side of the spatial structure and configured to be connected to the base jacket of the sleeve or the anilox roller.

4. Bush as claimed in claim 2 or 3, **characterized in that** the spatial structure formed by 3-D printing comprises cavities enclosed by the spatial structure.

5. Bush as claimed in any of the foregoing claims, **characterized in that** the spatial structure comprises a channel system extending between an opening in an end surface of the bush and at least one opening in the outer surface of the bush.

6. Sleeve or anilox roller for use in flexo-printing, comprising a base jacket, a bush as claimed in any of the claims 1-5 and an outer jacket, **characterized in that** the bush is connected to the base jacket and that the outer jacket is arranged by means of lamination on the external tube of the bush, wherein
the bush is preferably a bush according to claims 2-5, wherein the spatial structure of the bush is printed onto the base jacket.

7. Method for manufacturing a bush for filling the space between a base jacket and an outer jacket of a cylinder for use in flexo-printing, the cylinder being a sleeve or an anilox roller, **characterized in that** the bush is manufactured by means of 3-D printing.

8. Method as claimed in claim 7, **characterized in that** the bush is constructed in axial direction during the 3-D printing.

9. Method as claimed in claim 7 or 8, **characterized in that**, apart from the initial layer, material is arranged only on already printed structures during the printing.

10. Method as claimed in claim 7, **characterized in that** the bush is constructed in radial direction during the 3-D printing.

11. Method as claimed in claim 10, **characterized in that** the initial structure is printed directly onto the base jacket.

12. Method as claimed in claim 10 or 11, **characterized in that** a radially extending segment with a part of the initial structure is printed initially, the segment is rotated round the base jacket of the bush, a segment is printed connecting to the printed segment and these two steps are repeated until the bush is completed.

13. Method as claimed in any of the claims 7-12, **characterized in that** a channel system is formed during the 3-D printing which extends between one opening in the end surface and at least one opening in the outer surface.

14. Method for manufacturing a sleeve or anilox roller for use in flexo-printing, **characterized in that** a bush manufactured according to any of the claims 7-10, 12 or 13 is pushed around a base jacket, is glued to the base jacket and that an outer jacket is arranged by means of lamination on the outer surface of the bush.

15. Method for manufacturing a sleeve as claimed in claim 14, **characterized in that** an adapter sleeve is manufactured, that a bush manufactured according to claim 13 is pushed around a base jacket, is glued to the base jacket, an outer jacket is arranged on the bush and that, after the outer jacket has been arranged, at least one opening is drilled in the outer surface of the outer jacket, each of which openings connect to an opening in the outer surface of the bush.
